(19)

Europäisches
Patentamt
European
Patent Office
Office européen
des brevets

(11) **EP 2 199 930 A1**

(12) **EUROPEAN PATENT APPLICATION**

(43) Date of publication:
**23.06.2010 Bulletin 2010/25**

(51) Int Cl.:
***G06F 17/30*** *(2006.01)*

(21) Application number: **08022160.9**

(22) Date of filing: **19.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks OY
02610 Espoo (FI)**

(72) Inventor: **Ding, Fu
100094 Haidian District Beijing (CN)**

(74) Representative: **Bruglachner, Thomas E.
Nokia Siemens Networks Oy
COO RTP IPR / Patent Administration
80240 Munich (DE)**

(54) **Method and device for data processing**

(57)    A method and a device for data processing are provided, wherein pages of a network are evaluated utilizing a means for collecting data to determine how many times a user has selected a page via direct access and/or via hyperlink access. Furthermore, a communication system is suggested comprising such a device.

# Fig.1

**Description**

The invention relates to a method and to a device for data processing as well as to a communication system comprising such device.

Deep packet inspection (DPI) (also referred to as "complete packet inspection") is a form of computer network packet filtering that examines the data and/or header part of a packet as it passes an inspection point, searching for non-protocol compliance, viruses, spam, intrusions or predefined criteria on which further processing may be based. Such further processing may include making a decision if the packet can pass or if it needs to be routed to a different destination, or for the purpose of collecting statistical information. Deep packet inspection (and filtering) enables advanced security functions as well as internet data mining, eavesdropping, and censorship.

With the plethora of web pages available via the World Wide Web (WWW), finding a particular piece of content often turns out to be like searching for a needle in a haystack. Ranking or sorting of contents in any document retrieval system is and increasingly will be a crucial issue.

A so-called PageRank has been introduced by Google, Inc. and is used for ranking query results produced by a search engine. The PageRank is a link analysis technique that ranks web pages based on the link structure alone. The WWW comprising web pages together with hyperlinks between the web pages is considered as a directed graph in which each web page is a node and each hyperlink a directed edge. In such directed graph, a random surfer model is applied: Hence, a surfer may start at any web page (i.e. at any node of the web graph). With each time step, the surfer proceeds from a current page A to a randomly chosen web page that can be accessed via a hyperlink provided by page A. In addition, at any step the surfer may get bored and choose to jump from the current node to any other node within the web, i.e. the user may jump to another node which is not directly linked by the page the user currently resides at. This behavior is called "teleport". The probability $\alpha$ of such teleport at any step may typically amount to 0.1 or 0.15. Based on this random surfer, every node in the web graph is assigned a numerical score between 0 and 1, which corresponds to a likelihood that the random surfer arrives at that particular page.

Based on this model, the PageRank PR value for any page $p_i$ can be expressed as follows (in iterative form):

$$PR(p_i) = \frac{\alpha}{N} + (1 - \alpha) \sum_{p_j \in M(p_j)} \frac{PR(p_j)}{L(p_j)}$$

where

$p_1, p_2,..., p_N$ each refers to a page of the WWW,

$M(p_i)$ is a set of pages that is linked to the page $p_i$,

$L(p_j)$ is the number of outbound links on the page $p_j$, and

N is the total number of pages.

Also, PageRank values are the dominant eigenvector of a modified adjacency matrix. The eigenvector $\overline{R}$ may amount to

$$\vec{R} = \begin{pmatrix} PR(p_1) \\ PR(p_2) \\ \vdots \\ PR(p_N) \end{pmatrix} \qquad\qquad (1).$$

Such eigenvector can be determined based on the following equation

$$\vec{R} = \alpha \cdot \vec{\mu} + (1 - \alpha) \cdot A\vec{R} \qquad\qquad (2)$$

where

$\overline{\mu}$     is an Nx1 unit column vector with all entries amounting to 1/N, and

A     is an NxN adjacency matrix in which

$$A_{ij} = \begin{cases} 1/L(p_j) & \text{if there is a link from page } p_j \text{ to page } p_i; \\ 0 & \text{if there is no link from page } p_j \text{ to page } p_i. \end{cases}$$

Iterative methods of solving PageRank equation (2) have been proposed in, e.g., "A Survey on 'PageRank' Computing, P. Berkhin, Internet Mathematics, Vol. 2, No 1., pp. 73-120, 2005".

However, existing solutions are disadvantageously based on the model described above, which do not reflect the real life scenario in an adequate manner.

The problem to be solved is to provide an approach that improves the above mentioned PageRank model and to provide a more accurate and reliable measurement to determine the order of pages within a set of pages, e.g., within the WWW.

This problem is solved according to the features of the independent claims. Further embodiments result from the depending claims.

In order to overcome this problem, a method for data processing is provided, wherein pages of a network are evaluated utilizing a means for collecting data to determine how many times a user has selected a page

- via direct access and/or
- via hyperlink access.

Hence, this approach allows, e.g., an Internet Service Provider (ISP) to rank pages of the WWW in an advantageous manner that may well reflect the real need of the customers to search for particular pieces of content within the WWW.

In an embodiment, said page is or is associated with a site or a web page of at least a portion of the World Wide Web.

It is also an embodiment that said means for collecting data comprises one of the following:

- Deep Packet Inspection;
- a web browser plug-in;
- an application collecting data running at a user's device;
- an application collecting data running at a network component.

Pursuant to another embodiment, the pages of the network are evaluated according to

$$\vec{R} = \alpha \cdot \vec{\omega} + (1 - \alpha) \cdot V\vec{R}$$

wherein

$\alpha$    is a probability for a direct access to occur;
$\vec{\omega}$    is a vector comprising visit counts $w_i$ of all web pages N;
$V$    is a matrix indicating whether or not two pages are connected by a link;
$\vec{R}$    is an eigenvector of a page rank.

In another embodiment, said direct access is an access initiated by an address that is directly input and not selected via a hyperlink provided by the current page.

Such direct access may also be referred to as access via "teleport". In other words, the user does not click on a link provided by an current page (this would be regarded as "hyperlink access"), but he deliberately decides to select a page without any necessity that the current page has a link to this destination. As indicated, the user may simply type in the address of the page he wants to be teleported to. However, the user may also utilize shortcuts, auto-completion of links, or bookmarks (e.g., previously stored) for such teleportation purposes.

In a further embodiment, the pages of the network are evaluated by providing a ranking between the pages.

Hence, the evaluation may result in a rank for each page, in particular the pages can be ranked or sorted by the approach provided herein.

In a next embodiment, the pages of the network are evaluated based on a search request initiated by a user or a program.

Such ranking or sorting of pages may be the result of a search request initiated by a user or an application (or program). The ranking can be presented in a browser indicating a sorted list of (web) pages. As an option, each entry in such list may comprise at least one of the following information: A summarizing information regarding each page, a link to directly access the page and a relevance indicator (e.g., in percent) indicating as how relevant the page appears to be regarding the search request.

Such ranking of pages may reveal a combination of the most important and the most frequently visited pages or sites throughout the net, in particular the WWW. In all likelihood the most frequently visited pages are quite relevant regarding the search request launched by, e.g., the user. If the result of such search would reveal hundreds of thousands of potential hits, such a ranking helps the user to find the pages first that have been considered "interesting" to other users. Such level of interest throughout the group of users can be considered useful when searching for the above mentioned needle in the haystack. The evaluation of pages as described herein allows to provide such a sorted or ranked list referring to said level of interest.

It is also an embodiment that the pages of the network are evaluated in an iterative manner and/or for several users.

Pursuant to another embodiment, Deep Packet Inspection is utilized within an access node that in particular is operated by a service provider.

According to an embodiment, the pages of the network are evaluated utilizing information regarding a time or a time interval.

Hence, a particular duration or time can be considered when evaluating the pages of the web. This can be done in a timely manner, e.g., per hour, per day, per week, per month, per year, etc.

According to another embodiment, the pages of the network are evaluated utilizing a local distribution of visiting users and/or a local distribution of pages visited.

The local distribution of users can be a fact to be considered when the pages are evaluated. The same applies to the local distribution of pages visited by the users.

In yet another embodiment, the pages of the network are evaluated utilizing at least one previous evaluation.

Hence, a history of previous evaluations can be utilized in order to build an improved evaluation and thus allow for an improved ranking.

According to a next embodiment, the pages of the network are evaluated utilizing a topic-related information and/or user-specific information.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with a network node, in particular with an access node that may be operated by a service provider.

The problem stated supra is further solved by a communication system comprising the device as described herein.

Also, the problem stated supra can be solved search application that produces results to a search request initiated by a user or by a program, wherein such search application utilizes the method as described herein.

Embodiments of the invention are shown and illustrated in the following figure:

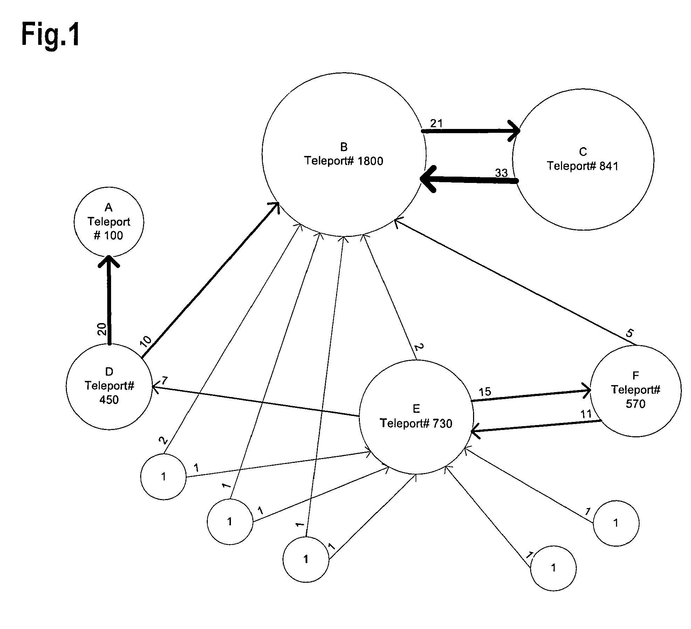

Fig.1    shows an exemplary directed graph visualizing use statistics.

The existing PageRank algorithm bears the disadvantage that for the random surfer model when the surfer teleports to other nodes, the probability is uniform as shown in the vector $\vec{\mu}$ of equation (2) as indicated above. However, in reality when a user starts a new browsing sessions, he may with a high probability start from major portals or from search engines, rather than choosing an arbitrary web page. For example, it can be determined that users tend to teleport to a trusted set of pages or sites, rather than directly tele-porting to untrusted or unknown pages and sites.

Also, it does not accurately reflect real life behavior that the surfer follows the outgoing links of a web page in a uniformly and randomly manner. In reality, links can be classified into different groups, wherein a first group of links is rarely selected by the user and a second group of links is frequently selected.

In addition, the PageRank mechanism is open to manipulation, e.g., by a link farm. Also, it is common practice that a search engine optimizer utilizes "internal links" of a page (or site) directed to the page (or site) itself in order to improve a website's PageRank.

All existing scenarios and improvements known for page ranking purposes are based on imaginary assumptions of the random surfer model. They are quite different compared to the real world scenario.

For example, by using a Deep Packet Inspection (DPI) technology, this invention enables the Internet Service Providers (ISPs) to collect use statistics of the WWW's end users. These statistics comprise, e.g., a number of times each URL is visited via teleport and a number of times each hyperlink of a web page is followed or selected by the user.

Further relevant information may comprise a time slot or a time range of such selections or visits as well as a local distribution of visits or of users visiting sites or pages.

However, solutions other than DPI may be applicable as well, e.g., information can be gathered by means of a web browser plug-in (e.g., Google toolbar, Alexa toolbar). Hence, any means utilized for collecting data may be used.

Utilizing such information, this approach is able to compute a more accurate VisitRank value for a web page, in particular for each web page to be considered. Such VisitRank value does no longer depend on an arbitrary and at least partially incorrect assumption of the random surfer model.

Hence, the ISP utilizing the approach presented is able to make full use of its position as an Internet access point for end users for collecting information and determining statistics regarding the users' behavior.

DPI technologies can be utilized to collect Internet traffic. According to the approach provided herein, the WWW can be regarded as a directed graph. Visiting statistics of web traffic may be collected in real time by DPI.

**Fig.1** shows an exemplary directed graph visualizing use statistics. Each circle shows a web page, each directed line shows a hyperlink from one web page to another web page. A number associated with the directed line indicates a number of times this link is followed by the users. To some extent, the shape (thickness) of the line reflects a weight or usage of the hyperlink. A size of the circle symbolically indicates a value of the VisitRank. "Teleport#" is the number of times the page is visited via (direct) teleport.

The approach presented herein mainly gathers at least one of the following kind of information:

(1) A number of times each web page is visited via teleport operation. In such case of teleport, the particular web page's address is selected, e.g., by directly being typed into the browser's address bar, rather than being visited by following hyperlinks from other web pages.

(2) A number of times each hyperlink on every web page is selected ("clicked") by end users.

With information (1) a distribution of all teleport operations among web pages can be determined. Then, a VisitRank can be assessed by employing different teleport possibilities.

With information (2) the real possibility of each hyperlink being selected by the vast user group can be assessed. Subsequently, the VisitRank may be enhanced by using such real possibilities of the users selecting outbound links.

In addition, time information can be gathered. For example, statistics and information can be collected on a daily basis and a daily VisitRank can be determined. The same may apply for a different time basis, e.g., weekly, monthly, yearly or even hourly. It is also possible that history data can be considered, i.e. an updated VisitRank can be determined on previous values of VisitRanks.

It is a further alternative, to compute a topic-sensitive VisitRank based on ODP or Yahoo! directory information. Hence, VisitRank can be used for personalization purposes.

For any period of time, the visit counts $w_i$ of all web pages N can be normalized as a vector

$$\vec{\omega} = \begin{pmatrix} w_1 \\ w_2 \\ \vdots \\ w_N \end{pmatrix},$$

and the NxN adjacency matrix can be defined as

$$V_{ij} = \begin{cases} c/L(p_j) & \text{if there is a link from page } p_j \text{ to page } p_i; \\ 0 & \text{if there is no link from page } p_j \text{ to page } p_i. \end{cases}$$

where

c        is the number of times hyperlink $p_j$ to $p_i$ is selected, and
$L(p_j)$     is the total number of times the outbound links on page $p_j$ are selected.

Then VisitRank equation can be determined as

$$\vec{R} = \alpha \cdot \vec{\omega} + (1 - \alpha) \cdot V\vec{R} \qquad\qquad (3)$$

The computation of equation (3) can be done accordingly to the solutions provided for equation (2).

Further advantages:

The VisitRank provided reflects the reality of the web more accurately than other rank evaluations. It is time-variant to show how Internet users collectively utilize the web. The VisitRank is insensitive to manipulation and it allows an improved measurement of the web sites' rankings compared to existing solutions.

**List of Abbreviations:**

DPI     Deep Packet Inspection
HTTP    Hypertext Transfer Protocol
ISP     Internet Service Provider
URL    Uniform Resource Locator
WWW   World Wide Web

**Claims**

1. A method for data processing, wherein pages of a network are evaluated utilizing a means for collecting data to determine how many times a user has selected a page

   - via direct access and/or
   - via hyperlink access.

2. The method according to claim 1, wherein said page is or is associated with a site or a web page of at least a portion of the World Wide Web.

3. The method according to any of the preceding claims, wherein said means for collecting data comprises one of the following:

   - Deep Packet Inspection;
   - a web browser plug-in;
   - an application collecting data running at a user's device;
   - an application collecting data running at a network component.

4. The method according to any of the preceding claims, wherein the pages of the network are evaluated according to

$$\vec{R} = \alpha \cdot \vec{\omega} + (1 - \alpha) \cdot V\vec{R}$$

   wherein

   $\alpha$ is a probability for a direct access to occur;
   $\overline{\omega}$ is a vector comprising visit counts $w_i$ of all web pages N;
   V is a matrix indicating whether or not two pages are connected by a link;
   $\overline{R}$ is an eigenvector of a page rank.

5. The method according to any of the preceding claims, wherein said direct access is an access initiated by an address that is directly input and not selected via a hyperlink provided by the current page.

6. The method according to any of the preceding claims, wherein the pages of the network are evaluated by providing a ranking between the pages.

7. The method according to any of the preceding claims, wherein the pages of the network are evaluated based on a search request initiated by a user or a program.

8. The method according to any of the preceding claims, wherein the pages of the network are evaluated in an iterative manner and/or for several users.

9. The method according to any of the preceding claims, wherein Deep Packet Inspection is utilized within an access node that in particular is operated by a service provider.

10. The method according to any of the preceding claims, wherein the pages of the network are evaluated utilizing information regarding time or a time interval.

11. The method according to any of the preceding claims, wherein the pages of the network are evaluated utilizing a local distribution of visiting users and/or a local distribution of pages visited.

12. The method according to any of the preceding claims, wherein the pages of the network are evaluated utilizing at least one previous evaluation.

13. The method according to any of the preceding claims, wherein the pages of the network are evaluated utilizing a topic-related information and/or user-specific information.

14. A device comprising and/or being associated with a processor unit and/or a hard-wired circuit and/or a logic device that is arranged such that the method according to any of the preceding claims is executable thereon.

15. The device according to claim 14, wherein the network node is an access node connected to several subscribers, wherein such access node is in particular operated by a service provider.

16. Communication system comprising the device according to any of claims 14 or 15.

17. Search application providing search results pursuant to a search request initiated by a user or by a program, wherein such search application utilizes the method according to any of claims 1 to 13.

# Fig.1

**Europäisches Patentamt**
**European Patent Office**
**Office européen des brevets**

# EUROPEAN SEARCH REPORT

**Application Number**

EP 08 02 2160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENG CHEN ET AL: "A unified framework for web link analysis" WEB INFORMATION SYSTEMS ENGINEERING, 2002. WISE 2002. PROCEEDINGS OF T HE THIRD INTERNATIONAL CONFERENCE ON 12-14 DEC. 2002, PISCATAWAY, NJ, USA,IEEE, 12 December 2002 (2002-12-12), pages 63-70, XP010632781 ISBN: 978-0-7695-1766-7 * the whole document * ----- | 1-17 | INV. G06F17/30 |
| X | RODRIGUEZ-MULA, GERARD AND GARCIA-MOLINA, HECTOR AND PAEPCKE, ANDREAS: "Collaborative value filtering on the Web" COMPUTER NETWORKS AND ISDN SYSTEMS, [Online] vol. 30, 2000, pages 1-3, XP002534911 Retrieved from the Internet: URL:http://ilpubs.stanford.edu:8090/468/1/2000-47.pdf> [retrieved on 2009-07-01] * the whole document * ----- | 1-17 | |
| X | CHEN DING, CHI-HUNG CHI, TIEJIAN LUO: "AN IMPROVED USAGE-BASED RANKING" ADVANCES IN WEB-AGE INFORMATION MANAGEMENT, [Online] 1 January 2002 (2002-01-01), pages 67-84, XP002534912 Springer Verlag Retrieved from the Internet: URL:http://www.springerlink.com/content/h0jut6d1dnrk5227/fulltext.pdf> [retrieved on 2009-07-01] * the whole document * ----- | 1-17 | **TECHNICAL FIELDS SEARCHED (IPC)** G06F |
| X | US 6 078 916 A (CULLISS GARY [US]) 20 June 2000 (2000-06-20) * the whole document * ----- | 1-17 | |

-/--

The present search report has been drawn up for all claims

| Place of search | Date of completion of the search | Examiner |
|---|---|---|
| The Hague | 1 July 2009 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br>EP 08 02 2160 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RICH TERANI: "Deep Packet Inspection (DPI) Vs. Privacy"[Online] 1 July 2008 (2008-07-01), XP002534915 Retrieved from the Internet: URL:http://blog.tmcnet.com/blog/rich-tehrani/ip-communications/deep-packet-inspection-dpi-vs-privacy.html> [retrieved on 2009-07-01] * the whole document * ----- | 3 | |
| | | | TECHNICAL FIELDS SEARCHED (IPC) |

The present search report has been drawn up for all claims

| Place of search | Date of completion of the search | Examiner |
|---|---|---|
| The Hague | 1 July 2009 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 08 02 2160

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2009

| Patent document cited in search report | Publication date | Patent family member(s) | Publication date |
|---|---|---|---|
| US 6078916 A | 20-06-2000 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. Berkhin.** A Survey on 'PageRank' Computing. *Internet Mathematics,* 2005, vol. 2 (1), 73-120